Europäisches Patentamt

European Patent Office

Office européen des brevets

(11) Veröffentlichungsnummer: **0 058 630**
**B1**

# EUROPÄISCHE PATENTSCHRIFT

(45) Veröffentlichungstag der Patentschrift:
12.06.85

(51) Int. Cl.⁴: **C 04 B 35/04** // F24H7/00, C09K5/00

(21) Anmeldenummer: **82630009.7**

(22) Anmeldetag: **18.01.82**

(54) Verfahren zur Herstellung von zum Speichern thermischer Energie geeignete Speicherelemente.

(30) Priorität: 27.01.81 LU 83100

(43) Veröffentlichungstag der Anmeldung:
25.08.82 Patentblatt 82/34

(45) Bekanntmachung des Hinweises auf die Patenterteilung:
12.06.85 Patentblatt 85/24

(84) Benannte Vertragsstaaten:
AT BE CH DE FR GB IT LI NL SE

(56) Entgegenhaltungen:
DE - A - 1 948 447
DE - A - 2 024 288
DE - A - 2 162 254
DE - A - 2 457 324
DE - B - 1 209 476
DE - B - 2 851 083
FR - A - 2 163 566

CHEMICAL ABSTRACTS, Band 87, Nr. 20, 14. November 1977, Zusammenfassung 156142e, Seite 244 COLUMBUS, OHIO (US)

(73) Patentinhaber: **ARBED S.A., Avenue de la Liberté 19, L-2930 Luxembourg (LU)**

(72) Erfinder: **Schockmel, Robert, 4 avenue Terre Rouge, L-4330 Esch/Alzette (LU)**

(74) Vertreter: **Neyen, René, ARBED Administration Centrale P.F. 1802, L-2930 Luxembourg (LU)**

## Beschreibung

Die vorliegende Erfindung betrifft Speicherelemente zum Speichern thermischer, insbesondere elektrothermischer Energie.

Als Grundmaterial für die Herstellung von Speicherelementen für Speicher- bzw. Rekuperatoröfen kommen generell nur feuerfeste Stoffe in Frage. Bekannte feuerfeste Stoffe, sowie Schamotte, Sillimanit, Mullit, Magnesit, Chrommagnesit, Chromerz, Zirkonoxyd, weisen in dieser Reihenfolge steigende Dichten sowie Schmelztemperaturen auf. Anders verhält es sich, was die in diesem Zusammenhang wichtigeren Eigenschaften anbelangt, nämlich die spezifische Wärme (J.h/kg. Grad), die Wärmeleitfähigkeit (W/m. Grad) sowie der Wärmeinhalt (J/kg) bzw. (J/Grad.1).

So weist Schamotte bei 1200°C eine etwa doppelt so hohe spezifische Wärme auf wie Zirkonoxyd, während ihre Wärmeleitfähigkeit deutlich unterhalb der von Zirkonoxyd liegt. Magnesit hat eine spezifische Wärme die vergleichbar ist mit der von Schamotte, weist jedoch eine nahezu dreimal höhere Wärmeleitfähigkeit auf.

In der vorliegenden Problematik kommt es darauf an, Speicherelemente aus feuerfesten Materialien herzustellen, die nicht nur die geeigneten Eigenschaften aufweisen, sondern auch zu attraktiven Gestehungspreisen zur Verfügung stehen.

So beschreibt die GB-PS 1 262 465 Speicherelemente, die zu nahezu 100% aus Fe2O3 bestehen. In der Tat handelt es sich um ein Material, das feuerfest ist und eine sehr günstige Wärmeleitfähigkeit aufweist. Hier hat es sich gezeigt, dass ein Kompaktieren des Oxyds mit Drücken von 310-775 kg/cm$^2$ zu keinerlei bedeutungsvollen Änderungen hinsichtlich der Wärmeleitfähigkeit führt.

Die besagte GB-PS erteilt die Lehre, als Grundmaterial entweder Fe2O3 zu benutzen oder aber Fe3O4, das allerdings gezielt zu Fe2O3 oxidiert wird. Diese Oxydation findet im Verlauf des Sinterns statt, dem die Speicherelemente nach dem Pressen unterworfen werden. Das Eisen wird demnach in seiner höchsten Oxydationsstufe verwendet, oder in diese übergeführt. Dies hat zweifelsohne zum Zweck zu verhindern, dass die Elemente im Betrieb Oxydationen durch Luftsauerstoff unterworfen werden, wodurch ihre physiko-chemischen Eigenschaften sich ändern würden. Die Verwendung von Oxyden des dreiwertigen Eisens soll demnach ein stabiles Produkt liefern.

Eine ganz andere Lehre ist der CH 453 626 zu entnehmen. Dort wird dargelegt, dass die Oxydation von Fe$_3$O$_4$ bei 750°C in Luft überraschenderweise so geringfügig ist, dass sich die Verwendung dieses Stoffes als Wärmespeicher empfiehlt. Hier wird u.a. vorgesehen, das Fe$_3$O$_4$ in Blöcken zu vergiessen.

Sei es, dass man die eine oder die andere dieser Lehren befolgt, so muss jedenfalls jedes der verwendeten Oxyde in möglichst reiner Form vorliegen und gemäss relativ teuren Verfahren verarbeitet werden, wobei die Energiekosten besonders schwer ins Gewicht fallen.

Weiterhin ist aus der DE 2 851 083 ein Verfahren zur Herstellung von eisenoxydhaltigen Wärmespeichersteinen bekannt, bei dem gepulvertes Eisen sowie Olivin zum Einsatz gelangt. Als Bindemittel kann eine Sulfitablauge oder eine geringe Menge Ton und Phosphatbindemittel verwendet werden. Der Stein wird anschliessend in oxydierender Atmosphäre bei maximal 1400 bis 1500°C gebrannt.

Die Aufgabe der vorliegenden Erfindung besteht darin, ein Verfahren zur Herstellung von Speicherelementen vorzuschlagen, welche gegenüber bekannten Elementen günstigere Gestehungskosten und zumindest gleichwertige Eigenschaften hinsichtlich der Betriebsanforderungen aufweisen und welche die hierfür notwendige chemische Stabilität besitzen.

Diese Aufgabe wird erfindungsgemäss dadurch gelöst, dass man 50-95 Gew.-% Magnesiumoxyd, dessen mittlere Korngrösse zwischen 0,1 und 4 mm liegt, 5-50 Gew.-% Eisenoxyd dessen Korngrösse unterhalb 0,5 mm liegt und ein Bindemittel bestehend aus Eisensulfat innig vermengt, das Gemisch in einer Formpresse verpresst und anschliessend tempert.

Erfindungsgemäss handelt es sich bei dem verwendeten Magnesiumoxyd um durch Zerkleinern von gebrauchten feuerfesten Steinen zurückgewonnenes Material und zwar werden hierfür feuerfeste Steine aus der Hütten- bzw. Glasindustrie vorgesehen, die ursprünglich mehr als 85% MgO enthalten.

Die Verwendung von reinem MgO wird üblicherweise als Ausgangsstoff nicht in Betracht gezogen und zwar einerseits wegen des hohen Preises für reines MgO und andererseits wegen der hohen Energiekosten, die beim Hochtemperatursintern dieses Stoffes entstehen.

Diese Schwierigkeiten werden erfindungsgemäss umgangen indem man die Speicherelemente durch Verpressen von zerkleinertem, aus gebrauchten Behälter- bzw. Ofenausmauerungssteinen zurückgewonnenem Magnesiumoxyd im Gemisch mit feinkörnigem Eisenerz herstellt, wobei Eisensulfat als Bindemittel dient.

In der Tat ist Magnesiumoxyd in der vorliegenden Optik als feuerfestes Material weder anzusehen, noch als solches zu behandeln; da die Betriebstemperaturen der erfindungsgemässen Speicherelemente in der Grössenordnung von 700°C liegen, kann auf ein kostspieliges Sintern bei hohen Temperaturen verzichtet werden.

Die Verwendung von feinkörnigem Eisenerz ist in diesem Zusammenhang aus mehreren Gründen interessant. Erstens kann man mittels diesem Zusatz die übliche Lücke im Feinkornbereich des Magnesiakornaufbaus auffüllen und zweitens ist es möglich, den zum Teil stark schwankenden Eisenoxydgehalt in zurückgewonnener Magnesia zwecks Erzielens einer einheitlichen chemischen Zusammensetzung im Endprodukt zu korrigieren. Des weiteren sind feinkörnige Eisenerze, insbesondere Reicherze zu sehr billigen Preisen erhältlich. Der Grund hierfür ist die Tatsache, dass man Erze preisgünstig durch Rohrleitungen transportiert und dass man, um dies durchführen zu können, die Erze rein vermahlen muss. Es hat sich herausgestellt, dass zu diesem Zweck eine mittlere Korngrösse von rund 50 $\mu$m am günstigsten

ist, wobei es auch noch zu einer Anreicherung der Erze kommt. Demnach ist die erfindungsgemässe Verwendung von feinkörnigen Reicherzen besonders vorteilhaft.

Das verwendete Ferrosulfat ist vorzugsweise aus Stahlbeizlaugen isoliertes Produkt, das äusserst preisgünstig zu beziehen ist. Dieses Bindemittel bewirkt eine Verfestigung der Speicherelemente durch Tempern (120-250°C), während konventionelle Speicherelemente durch Brennen (ca. 1300°C) verfestigt werden müssen.

Zum Herstellen der Speicherelemente werden die Komponenten innig vermengt und in einer geeigneten Formpresse unter Drücken von 1 - 3 und vorzugsweise 1.5 t/cm$^2$ verpresst und anschliessend während mindestens 3 Stunden bis auf 250°C erhitzt.

Die erfindungsgemässen Speicherelemente weisen die erforderlichen Eigenschaften auf und zwar liegt der ausnutzbare Temperaturbereich zwischen 20 und 800°C; die Elemente haben ein Raumgewicht von rund 3 kg/l, ihr gesamter Wärmeinhalt liegt zwischen 3500 und 3600 J/°C.l. J/°C.l. Die Wärmeleitfähigkeit beträgt rund 5 W/m.°C.

Spezifisches Ausführungsbeispiel für ein typisches, erfindungsgemäss hergestelltes Speicherelement:

Ausgangsmaterial:
— Zurückgewonnenes Magnesiumoxyd, enthaltend:
  72.0% MgO und 25.3% FeO; Korngrösse 0,2-2,8 mm.
  Kornaufbau nach Fuller-Bolomey
— Feinkörniges Reicherz, enthaltend:
  94.0% Fe203; Korngrösse 0,01-0,2 mm.
— Eisensulfat enthaltend:
  28.5% FeO; 54.2% SO4; 15% freie H2SO4.

Im Gemisch (rund):
  64.0% MgO
  22.5% Fe203
  9.5% FeO
  3.0% H2O

Der unter 1.5 t/cm$^2$ Druck hergestellte Pressling wurde während 3 Std. auf 250°C erhitzt und während 18 Stunden im geschlossenen Ofen abkühlen gelassen.

| | | | |
|---|---|---|---|
| Raumgewicht | : | 3.14 | kg/l |
| Spezifische Wärme | : | 1138 | J.h/kg.°C |
| Wärmeinhalt | : | 3562 | J/°C.l |
| Wärmeleitfähigkeit | : | 4-6.4 | W/m.°C |

Wie aus dem Vorstehenden ersichtlich ist, sind die Gestehungskosten der erfindungsgemässen Speicherelemente gegenüber bekannten Elementen stark reduziert und zwar durch den Einsatz billiger gebrauchter feuerfester Steine, preisgünstiger Reicherze die in feingemahlenem Zustand angeboten werden, sowie äusserst billigem chemischem Bindemittel, nämlich Eisensulfat aus der Stahlbeize. Weiter ist hervorzuheben, dass das bekannte energieintensive Brennen durch ein vergleichsweise billiges Tempern ersetzt wird und keine besonders hohen Pressdrücke angewendet werden müssen.

Nicht unerheblich ist schliesslich die Tatsache, dass sämtliche zur Herstellung der erfindungsgemässen Speicherelemente erforderlichen Stoffe sich im greifbaren Bereich der Hüttenindustrie befinden und somit aus einer und derselben Quelle bezogen, bzw. innerhalb eines Hüttenbetriebes hergestellt werden können.

**Patentansprüche**

1. Verfahren zum Herstellen von thermischen Speicherelementen welche Magnesiumoxyd sowie Eisenoxyd beinhalten, dadurch gekennzeichnet, dass man 50-95 Gew.-% Magnesiumoxyd, dessen mittlere Korngrösse zwischen 0,1 und 4 mm liegt, 5-50 Gew.-% Eisenoxyd dessen Korngrösse unterhalb 0,5 mm liegt und ein Bindemittel bestehend aus Eisensulfat innig vermengt, das Gemisch in einer Formpresse verpresst und anschliessend tempert.

2. Verfahren nach Anspruch 1, dadurch gekennzeichnet, dass das Magnesiumoxyd durch Zerkleinern von gebrauchten feuerfesten Steinen gewonnen wird.

3. Verfahren nach Anspruch 1, dadurch gekennzeichnet, dass man als Eisenoxyd feinkörniges Reicherz verwendet.

4. Verfahren nach Anspruch 3, dadurch gekennzeichnet, dass das zu verpressende Gemisch etwa 22,5 Gew.-% $Fe_2O_3$ beinhaltet.

5. Verfahren nach Anspruch 1, dadurch gekennzeichnet, dass man das verwendete Eisensulfat aus Stahlbeizlaugen isoliert.

6. Verfahren nach einem der Ansprüche 1-5, dadurch gekennzeichnet, dass man das Gemisch unter Drücken von 1-3 und vorzugsweise 1,5 t/cm$^2$ verpresst.

7. Verfahren nach einem der Ansprüche 1-6, dadurch gekennzeichnet, dass man die Presslinge während mindestens 3 Stunden bis auf 250°C erhitzt.

8. Verfahren nach einem der Ansprüche 1-3, dadurch gekennzeichnet, dass man den Kornaufbau des zerkleinerten Magnesiumoxyds bestimmt und dann dem Magnesiumoxyd eine derartige Menge feinkörniges Eisenerz hinzufügt, dass die Lücke im Feinkornbereich des Magnesiumoxyds geschlossen wird.

**Claims**

1. Method of making thermal storage units containing magnesium oxide as well as iron oxide, characterized in that 50-95% in weight of magnesium oxide, having a mean particle size between 0,1 and 4 mm, 5-50% in weight of iron oxide having a particle size smaller than 0,5 mm and a chemical binder consisting of iron sulfate are intimately mixed, that the mixture is pressed into blocks and that the blocks are subsequently heat treated.

2. Method according to claim 1, characterized in that the magnesium oxide is obtained through crushing of recovered refractory bricks.

3. Method according to claim 1, characterized in that the iron oxide consists of fine grained rich iron ore.

4. Method according to claim 3, characterized in that the mixture to be pressed contains 22,5% in weight of $Fe_2O_3$.

5. Method according to claim 1, characterized in that the iron sulfate is recovered from a steel-pickling liquor.

6. Method according to one of the claims 1-5, characterized in that the mixture is pressed using pressing powers of 1-3 t/cm$^2$ and preferably of 1,5 t/cm$^2$.

7. Method according to one of the claims 1-6, characterized in that the pressed product is heated to 250°C for at least 3 hours.

8. Method according to one of the claims 1-3, characterized in that the particle size distribution of the comminuted magnesium oxide is determined and that one subsequently adds a quantity of iron ore fines so as to fill the gaps in the low range in the particle size distribution of the magnesium oxide.

**Revendications**

1. Procédé de fabrication d'éléments à accumulation de chaleur contenant de l'oxyde de magnésium et de l'oxyde de fer, caractérisé en ce qu'on mélange intimement 50-95% en poids d'oxyde de magnésium dont la dimension moyenne des grains est comprise entre 0,1 et 4 mm, 5-50% en poids d'oxyde de fer dont la dimension des grains est inférieure à 0,5 mm et un liant constitué par du sulfate de fer, qu'on comprime le mélange dans une presse de moulage et qu'on le recuit ensuite.

2. Procédé selon la revendication 1, caractérisé en ce qu'on obtient l'oxyde de magnésium par concassage d'éléments réfractaires usés.

3. Procédé selon la revendication 1, caractérisé en ce qu'on utilise comme oxyde de fer du minerai de fer riche à grains fins.

4. Procédé selon la revendication 3, caractérisé en ce que le mélange contient quelque 22,5% en poids de $Fe_2O_3$.

5. Procédé selon la revendication 1, caractérisé en ce qu'on récupère le sulfate de fer à partir de liqueurs de décapage d'acier.

6. Procédé selon une des revendications 1-5, caractérisé en ce qu'on comprime le mélange à des pressions comprises entre 1 et 3 t/cm$^2$ et de préférence égale à 1,5 t/cm$^2$.

7. Procédé selon une des revendications 1-6, caractérisé en ce qu'on chauffe les éléments pressés pendant au moins 3 heures jusqu'à 250°C.

8. Procédé selon une des revendications 1-3, caractérisé en ce qu'on détermine la granulométrie de l'oxyde de magnésium concassé et qu'on ajoute ensuite à l'oxyde de magnésium des fines de minerai de fer en quantités suffisantes pour combler les lacunes que présente le domaine inférieur de la distribution granulométrique de l'oxyde de magnésium.